# EUROPÄISCHE PATENTSCHRIFT

(11) **EP 1 792 775 B1**
(45) Veröffentlichungstag und Bekanntmachung des Hinweises auf die Patenterteilung: **07.03.2018**
(21) Anmeldenummer: 06023457.2
(22) Anmeldetag: 10.11.2006
(51) Int. Cl.: B60Q 1/48, B60Q 9/00

(54) **KRAFTFAHRZEUG MIT EINEM SENSOR ZUM ERKENNEN EINES HINDERNISSES IN EINER UMGEBUNG DES KRAFTFAHRZEUGES**
VEHICLE WITH A SENSOR FOR THE DETECTION OF HAZARDS IN THE VEHICLE SURROUNDINGS
VÉHICULE ET CAPTEUR POUR DÉTECTER DES OBSTACLES DANS LE VOISINAGE DU VÉHICULE

(30) Priorität: 02.12.2005 US 741937 P
(43) Veröffentlichungstag der Anmeldung: 06.06.2007
(73) Patentinhaber: Volkswagen Aktiengesellschaft, 38440 Wolfsburg (DE); AUDI AG, 85045 Ingolstadt (DE)
(72) Erfinder: Chen, Pao Hsu, Milpitas California 95035 (US); Rosario, Daniel, Santa Cruz California 95060 (US); Stoschek, Arne, Dr., Palo Alto California 94303 (US)

(56) Entgegenhaltungen:
- EP-A1- 1 403 137
- EP-A1- 1 522 874
- EP-A1- 1 524 638
- WO-A1-01/25054
- WO-A1-2004/024498
- DE-A1- 3 942 770
- DE-A1- 4 107 850
- DE-A1- 19 741 896
- DE-T1- 19 982 814
- US-A- 4 833 469
- US-A1- 2005 134 440
- US-B1- 6 327 522

## Beschreibung

Die Erfindung betrifft ein Kraftfahrzeug mit einem Sensor zum Erkennen eines Hindernisses in einer Umgebung des Kraftfahrzeuges.

Die EP 1 343 022 A1 offenbart ein Verfahren und ein System zur Erfassung von Gegenständen im Nahbereich eines Fahrzeuges und/oder zur präventiven Kollisionswarnung eines Fahrzeuges mit einer am Fahrzeug angeordneten, den Nahbereich bzw. die Umgebung des Fahrzeuges erfassenden Kamera, mit einer Strahlenquelle, die einen Sendestrahl in den von der Kamera erfassten Bereich sendet, wobei der an dem Untergrund oder an einem Gegenstand reflektierte Sendestrahl auf dem Empfangsarray der Kamera abgebildet wird und aus der Position des abgebildeten Sendestrahls auf dem Empfangsarray bestimmt wird, ob Gegenstände im Strahlengang des Sendestrahles vorhanden sind.

Die DE 103 55 249 A1 offenbart ein Fahrassistenzsystem für ein Kraftfahrzeug mit zumindest einem Radargerät zum Messen eines Abstandes zwischen dem Radargerät und einem Objekt, einer Geschwindigkeitsdifferenz zwischen dem Radargerät und dem Objekt oder eines Winkels zwischen einer Strahlrichtung des Radargerätes und dem Objekt durch Abstrahlen eines Sendesignals und Empfangen eines von dem Objekt reflektierten Anteils des Sendesignals, wobei das Sendesignal in Abhängigkeit zumindest einer Betriebsgröße des Kraftfahrzeuges einstellbar ist.

Vorrichtungen zur Erfassung eines Umfeldes eines Kraftfahrzeuges sind z.B. in der DE 42 22 409 C2, der EP 0 361 188 B1, der DE 195 18 978 C2, der DE 103 08 168 A1, der DE 103 47 976 A1 und der DE 103 57 704 A1 offenbart.

Die Internetseite www.german-helicopter.com/Pages/content/cont offenbart einen Hinderniswarnsensor für einen Hubschrauber. Dieser Hinderniswarnsensor ist ein abbildendes LaserRadar mit einer faseroptischen Scanner-Architektur, mit der besonders die Detektion von Drähten und drahtähnlichen Objekten erreicht wird. Der faseroptische Scanner basiert auf zwei rotierenden Spiegeln, die auf einer gemeinsamen Welle sitzen. Die Faseroptik transformiert dabei die Bewegung der rotierenden Spiegel in eine lineare Strahlablenkung.

In der Zeitschrift "Technisches Messen", 71 (2004) 3, Seiten 164 bis 172 ist ein Verfahren zur Fahrzeugumfelderfassung basierend auf einem mehrzeiligen Laserscanner als Sensor offenbart.

Das Fraunhofer-Institut für Physikalische Messtechnik IPM, Heidenhofstraße 8, 79110 Freiburg, Deutschland bietet ein Puls-Laserradar an, das für den Einsatz in schnell scannenden 2-D- und 3-D-Mess-Systemen sowie zur Abstands- und Geschwindigkeitsmessung sehr schneller, explosionsartiger Prozessabläufe geeignet ist.

Die DE 42 22 642 A1 offenbart eine bilderfassende Sensoreinheit mit einem passiven Sensor, der ein Gesichtsfeld in Bildelemente mit unterschiedlichen Helligkeiten zerlegt und dem bildverarbeitende Mittel nachgeschaltet sind, wobei ein zusätzlicher, aktiver LADAR-Sensor mit einem Laser vorgesehen ist, der einen Abtaststrahl aussendet und aus der von Flächen im Gesichtsfeld reflektierten Strahlung Entfernungssignale erzeugt.

Die DE 39 42 770 A1 betrifft eine Entfernungsbildkamera mit einer Lichtquelle, mit einer zweidimensionalen Scanvorrichtung, mit einem Empfänger für das reflektierte Licht und mit einer Ansteuer- und Auswerteelektronik zur Erzeugung von Entfernungsbildern. Zur Erzeugung schneller Bildfolgen werden für die zweidimensionale mechanische Abtastung mit Schwenkspiegeln und faseroptischen Scannern mit routierenden Spiegeln sowie Sende- und Empfangsdiodenarrays und vollelektronisch angesteuerte Laserdiodenfelder und Empfängerdiodenfelder vorgeschlagen.

Die DE 41 07 850 A1 offenbart eine Anordnung zur Verbesserung der Sicht in Fahrzeugen bei Dunkelheit und schlechter Witterung sowie Nebel mittels Ausstrahlung und Empfang elektromagnetischer Wellen, wobei eine Beleuchtungsoptik zur Abstrahlung von Infrarotlicht mit festgelegter Sendepolarisation in einem vorgegebenen Raumwinkelbereich vorgesehen ist. Die Anordnung umfasst zudem eine Empfangsoptik zum Empfang reflektierender Anteile des abgestrahlten Lichts in zur Sendepolarisation orthogonaler Empfangspolarisation und einer Anzeigeoptik zur Darstellung der zu der Empfangsoptik gewonnenen Bildinformation im Sichtfeld des Fahrers oder eines Piloten mittels eines Head-up-Displays auf der Windschutzscheibe. Dabei ist vorgesehen, dass die Beleuchtungsoptik als Laser und die Empfangsoptik als Fernsehkamera, zum Beispiel als CCD-Kamera ausgestaltet ist.

Die EP 1 524 638 A1 offenbart eine Informationsdisplayvorrichtung mit einer Kamera zum Ausgeben eines Farbbildes durch Fotografieren einer Szene vor dem eigenen Fahrzeug, mit einem Navigationssystem zum Ausgeben einer Navigationsinformation in Abhängigkeit von einem Fahrbetrieb des eigenen Fahrzeugs, mit einer Erkennungseinheit zum Erkennen eines Ziels, das sich vor dem eigenen Fahrzeug befindet, auf der Basis des ausgegebenen Farbbildes und zum Ausgeben der Farbinformation des erkannten Ziels, sowie mit einer Steuereinheit zum Bestimmen von anzuzeigenden Informationen auf der Basis sowohl von der Erkennungseinheit der erkannten Ziele als auch der Navigationsinformationen.

Die EP 1 403 137 A1 offenbart eine Zustands-Überwachungseinrichtung für eine beweglichen Körper, wobei eine Umgebungsinformationserfassungseinrichtung zum Erfassen und Speichern von Informationen über eine Umgebung, die einen beweglichen Körper umgibt, und eine Wegabschätzungseinrichtung zum Abschätzen eines Bewegungsweges des beweglichen Körpers vorgesehen ist. Darüber hinaus ist eine Distanzbestimmungseinrichtung zum Identifizieren eines Gegenstandes, der anhand des abgeschätzten Bewegungsweges des beweglichen Körpers auftritt und zum Bestimmen der kürzesten Distanz entlang des abgeschätzten Bewegungsweges des beweglichen Körpers zwischen einem Abschnitt des bewegten Körpers und einem Abschnitt des Gegenstandes, die einander berühren, wenn sich der bewegliche Körper entlang seines abgeschätzten Weges bewegt, vorgesehen ist.

Die DE197 41 896 A1 offenbart eine Vorrichtung zur bildlichen Darstellung von Bereichen der Umgebung eines Kraftfahrzeuges in einem sich im Innenraum des Kraftfahrzeuges befindlichen Sichtbereich eines Fahrers, wobei die Vorrichtung zumindest einen Bildschirm umfasst, auf dem sensorisch erfasst und elektronisch bearbeitete Bildinformationen dargestellt werden.

Es ist Aufgabe der Erfindung, die Sicherheit beim Betrieb eines Kraftfahrzeuges, insbesondere beim Rückwärtsfahren, zu erhöhen. Eine geeignete Lösung soll dabei für den serienmäßigen Einsatz in einem Kraftfahrzeug geeignet sein.

Vorgenannte Aufgabe wird durch ein Kraftfahrzeug nach Anspruch 1 gelöst, das
- einen Sensor zum Erkennen eines Hindernisses in einer Umgebung des Kraftfahrzeuges,
- eine Steuerung zur Integration eines Symbols zur Kennzeichnung eines erkannten Hindernisses in ein Bild der besagten Umgebung des Kraftfahrzeuges oder zur Zuordnung des Symbols zur Kennzeichnung des erkannten Hindernisses zu dem Bild der besagten Umgebung des Kraftfahrzeuges, wobei die Position des Symbols in Bezug auf das Bild im Wesentlichen der Position des Hindernisses in dem Bild entspricht, und
- eine Anzeigevorrichtung zur Darstellung des Bildes der besagten Umgebung des Kraftfahrzeuges zusammen mit dem Symbol
umfasst.

In einer Ausgestaltung der Erfindung umfasst das Symbol eine Angabe in Bezug auf einen Abstand zwischen dem Kraftfahrzeug und dem Hindernis oder ist als eine Angabe in Bezug auf einen Abstand zwischen dem Kraftfahrzeug und dem Hindernis ausgestaltet.

In einer weiteren Ausgestaltung der Erfindung ist der Abstand zwischen dem Kraftfahrzeug und dem Hindernis mittels der Steuerung mittels einer Laufzeitmessung, insbesondere mittels Interferometrie, bestimmbar. Dabei wird die Laufzeit eines ausgesandten und an einem Hindernis (dessen Abstand zum Kraftfahrzeug bestimmt werden soll) reflektierten Lichtstrahls gemessen.

In einer weiteren Ausgestaltung der Erfindung umfasst das Symbol eine Warnung in Bezug auf das Hindernis oder ist als eine Warnung in Bezug auf das Hindernis ausgestaltet.

In einer weiteren Ausgestaltung der Erfindung umfasst das Symbol eine Angabe in Bezug auf einen Abstand zwischen dem Kraftfahrzeug und dem Hindernis sowie eine Warnung in Bezug auf das Hindernis. Gemäß der Erfindung umfasst der Sensor einen Laser zum Aussenden eines Lichtstrahls.

In einer weiteren Ausgestaltung der Erfindung umfasst der Sensor eine, insbesondere auf eine Wellenlänge des Lichtstrahls abgestimmte, Kamera. Eine solche Kamera ist insbesondere als Infrarotkamera (IR) oder als infrarotnahe Kamera (NIR) ausgestaltet. Gemäß der Erfindung umfasst der Sensor eine zweidimensionale Scannvorrichtung zum Bewegen des Lichtstrahls in einer ersten Ebene sowie in einer zur ersten Ebene orthogonalen zweiten Ebene, wobei der Lichtstrahl in eine Umgebung des Kraftfahrzeuges gelenkt wird. Die zweidimensionale Scannvorrichtung umfasst in einer Ausgestaltung ein MEMS oder ist als MEMS ausgestaltet. Die zweidimensionale Scannvorrichtung kann auch als Acousto-Optical Crystal (AOC), Galvanometer Spiegel oder Switchable Grating ausgestaltet sein. Die vorgenannte Kamera dient der Erfassung eines von besagter Umgebung des Kraftfahrzeuges reflektierten Anteils des Lichtstrahls.

In einer weiteren Ausgestaltung der Erfindung ist der Abstand zwischen dem Kraftfahrzeug und dem Hindernis mittels der Steuerung durch Messung der thermischen Intensität bei einer Wellenlänge des Lichtstrahls bestimmbar.

In einer weiteren Ausgestaltung der Erfindung umfasst der Sensor einen Spiegel zur Reflexion des Lichtstrahls in eine Umgebung des Kraftfahrzeuges, wobei der Spiegel mit einem ersten Torsionselement mit einer ersten Torsionsachse verbunden ist, wobei das erste Torsionselement mit einem zweiten Torsionselement mit einer zweiten Torsionsachse verbunden ist, und wobei die erste Torsionsachse im wesentlichen orthogonal zur zweiten Torsionsachse ausgerichtet ist oder die erste Torsionsachse zumindest eine zur zweiten Torsionsachse orthogonale Komponente besitzt.

Vorgenannte Aufgabe wird durch ein Verfahren nach Anspruch 11 zum Betrieb eines Kraftfahrzeuges gelöst, wobei ein Hindernis in einer Umgebung des Kraftfahrzeuges erkannt wird, wobei ein Bild besagter Umgebung des Kraftfahrzeuges erfasst wird, und wobei das Bild besagter Umgebung des Kraftfahrzeuges zusammen mit einem Symbol zur Kennzeichnung eines erkannten Hindernisses dargestellt wird, wobei das Symbol das Bild an einer Position überlagert, die im Wesentlichen der Position des Hindernisses in dem Bild entspricht.

Ein Bild der besagten Umgebung des Kraftfahrzeuges kann z.B. mittels der in Verbindung mit der Erfindung genannten Kamera bestimmt werden. Es kann aber auch eine zusätzliche Kamera vorgesehen werden.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen.
- Fig. 1: zeigt ein Ausführungsbeispiel eines Kraftfahrzeuges;
- Fig. 2: zeigt ein Ausführungsbeispiel eines Hindernissensors;
- Fig. 3: zeigt ein Ausführungsbeispiel einer zweidimensionalen Scannvorrichtung;
- Fig. 4: zeigt ein mögliches Szenario, bei dem sich hinter einem Kraftfahrzeug zwei Kinder und befinden;
- Fig. 5: zeigt ein Ausführungsbeispiel eines Verfahrens zum Betrieb des Kraftfahrzeuges;
- Fig. 6: zeigt ein Ausführungsbeispiel einer Darstellung mittels einer Anzeigevorrichtung;
- Fig. 7: zeigt ein Ausführungsbeispiel einer weiteren Darstellung mittels einer Anzeigevorrichtung;
- Fig. 8: zeigt ein Ausführungsbeispiel einer weiteren Darstellung mittels einer Anzeigevorrichtung; und
- Fig. 9: zeigt ein Ausführungsbeispiel einer weiteren Darstellung mittels einer Anzeigevorrichtung.

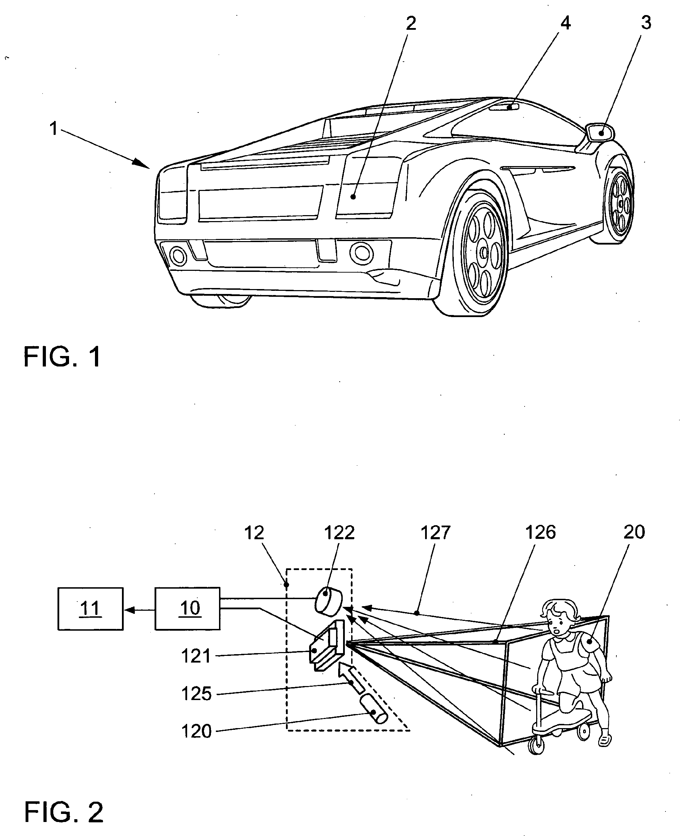

Fig. 1 zeigt ein Ausführungsbeispiel eines Kraftfahrzeuges 1. Das Kraftfahrzeug 1 umfasst einen - unter Bezugnahme auf Fig. 2 beschriebenen - Hindernissensor 12 zum Erkennen eines Hindernisses bzw. eines gefährdeten Objektes, wie das in Fig. 2 mit Bezugszeichen 20 bezeichnete Kind, in einer, insbesondere rückwärtigen, Umgebung des Kraftfahrzeuges 1. Der Hindernissensor 12 kann z.B. in das Heck und/oder in einen Seitenspiegel 3 des Kraftfahrzeuges 1 integriert sein. Der Hindernissensor 12 kann z.B. auch in eine Heckleuchte 2 des Kraftfahrzeuges 1 integriert sein. Der Hindernissensor 12 kann alternativ z.B. auch in eine Stoßstange oder eine Heckklappe integriert sein.

Der in Fig. 2 dargestellte Hindernissensor 12 umfasst einen Laser 120 zum Aussenden eines Lichtstrahls 125 im Infrarotbereich oder in einem infrarotnahen Bereich sowie eine zweidimensionale Scannvorrichtung 121 zum Bewegen des Lichtstrahls 125 in einer ersten Ebene sowie in einer zur ersten Ebene orthogonalen zweiten Ebene, wobei der Lichtstrahl in eine Umgebung des Kraftfahrzeuges gelenkt wird. Auf diese Weise wird mittels des Lichtstrahls 125 ein mit Bezugszeichen 126 bezeichneter Bereich angestrahlt bzw. abgetastet. Der Hindernissensor 12 umfasst zudem eine auf die Wellenlänge des Lichtstrahls 125 abgestimmte Kamera 122 zur Erfassung eines von der angestrahlten Umgebung des Kraftfahrzeuges 1 bzw. einem Hindernis bzw. einem gefährdeten Objekt, wie dem Kind 20, in diesem Bereich reflektierten Anteils127 des Lichtstrahls 120.

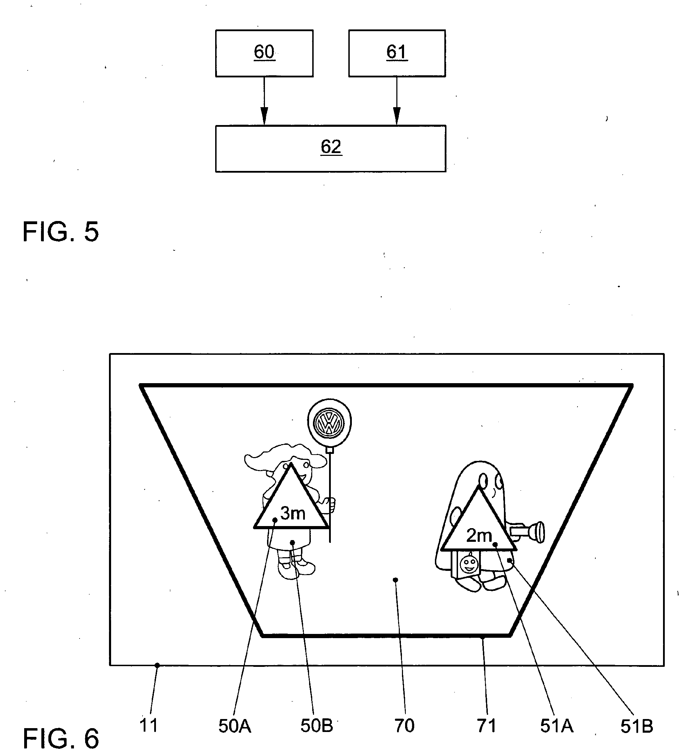

Das Kraftfahrzeug 1 umfasst eine Steuerung 10 zur Auswertung eines Ausgangssignals der Kamera 122 bzw. zur Ermittlung eines Abstandes zwischen dem Kraftfahrzeug 1 und einem Hindernis. In einer möglichen Ausgestaltung ist der Abstand zwischen dem Kraftfahrzeug 1 und dem Hindernis mittels einer Laufzeitmessung, insbesondere durch Interferometrie, bestimmbar. Alternativ oder zusätzlich kann vorgesehen sein, dass der Abstand zwischen dem Kraftfahrzeug 1 und dem Hindernis durch Messung der thermischen Intensität bei einer Wellenlänge des Lichtstrahls 120 bestimmbar ist. Die Steuerung 10 dient zudem -wie beispielhaft unter Bezugnahme auf Fig. 6 beschrieben - der Integration eines Symbols zur Kennzeichnung eines erkannten Hindernisses in ein Bild der abgetasteten Umgebung des Kraftfahrzeuges 1 oder zur Zuordnung des Symbols zur Kennzeichnung des erkannten Hindernisses zu dem Bild der abgetasteten Umgebung des Kraftfahrzeuges 1, wobei die Position des Symbols in Bezug auf das Bild im Wesentlichen der Position des Hindernisses in dem Bild entspricht.

Das Symbol und das Bild sind mittels einer Anzeigevorrichtung 11 darstellbar. Die Anzeigevorrichtung 11 kann z.B. nur ein einziges Display umfassen. In diesem Fall wird das Symbol mittels des Displays in das Bild integriert dargestellt. Es kann auch vorgesehen sein, dass die Anzeigevorrichtung 11 zwei übereinander angeordnete Displays umfasst, wobei ein, transparent ausgestaltetes, vorderes Display bezogen auf die Blickrichtung vor dem anderen, hinteren Display angeordnet ist. In diesem Fall kann vorgesehen sein, dass das Bild mittels des hinteren Displays und das Symbol mittels des vorderen Displays dargestellt wird. Die Anzeigevorrichtung 11 ist im Fahrgastraum des Kraftfahrzeuges 1 angeordnet. Die Anzeigevorrichtung 11 kann z.B. in das Lenkrad des Kraftfahrzeuges 1 oder das Armaturenbrett, ggf. im Kombiinstrument, des Kraftfahrzeuges 1 integriert sein. Die Anzeigevorrichtung 11 kann auch in den Rückspiegel 4 des Kraftfahrzeuges 1 integriert sein.

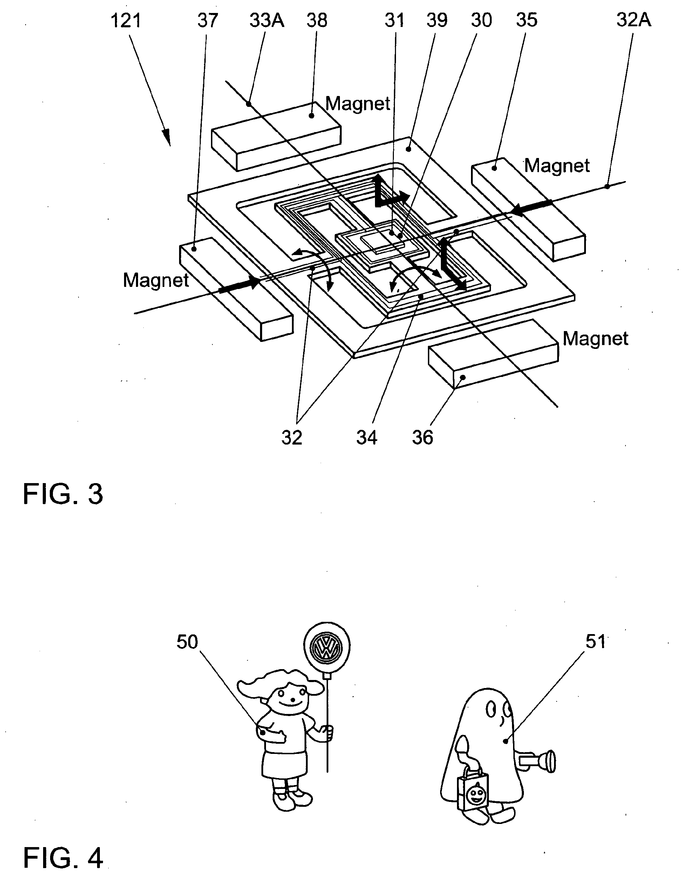

Die zweidimensionale Scannvorrichtung 121 kann als Acousto-Optical Crystal (AOC), Galvanometer Spiegel oder Switchable Grating ausgestaltet sein. Im vorliegenden Ausführungsbeispiel ist die zweidimensionale Scannvorrichtung 121 als MEMS entsprechend Fig. 3 ausgestaltet. Die zweidimensionale Scannvorrichtung 121 umfasst einen auf einer Platte 31 befestigten Spiegel 30, wobei die Platte 31 über ein Torsionselement 33 mit einem Rahmen 34 verbunden ist. Der Rahmen 34 ist wiederum über ein Torsionselement 32 mit einem Rahmen 39 verbunden. Die Torsionsachse 32A des Torsionselementes 32 ist im Wesentlichen orthogonal zur Torsionsachse 33A des Torsionselementes 33 ausgerichtet. Um den Rahmen 39 herum sind vier Permanentmagneten 35, 36, 37 und 38 angeordnet. Die Platte 31 und der Rahmen 34 sind mit Wicklungen verbunden. Mittels durch die Wicklungen fließenden Strom können die Platte 31 und der Rahmen 34 derart bewegt werden, dass der Lichtstrahl 120 den mit Bezugszeichen 126 bezeichneten Bereich anstrahlt bzw. abtastet.

Fig. 4 zeigt ein mögliches Szenario, bei dem sich hinter dem Kraftfahrzeug 1 zwei Kinder 50 und 51 befinden. Fig. 5 zeigt ein Verfahren zum Betrieb des Kraftfahrzeuges 1. Dabei werden die Kinder 50 und 51 in einem Schritt 60 als Hindernisse bzw. gefährdete Objekte erkannt. Zudem wird der Abstand zwischen dem Kraftfahrzeug 1 und den Kindern 50 und 51 bestimmt. Parallel dazu wird in einem Schritt 61 ein Bild der Umgebung hinter dem Kraftfahrzeug 1 erfasst. Den Schritten 60 und 61 folgt ein Schritt 62, in dem - wie in Fig. 6 dargestellt - das Bild 70 der Umgebung hinter dem Kraftfahrzeug 1 zusammen mit Symbolen 50A und 51A zur Kennzeichnung der Kinder 50 und 51 mittels der Anzeigevorrichtung 11 dargestellt wird, wobei die Symbole 50A und 51A die Abbilder 50B und 51B der Kinder 50 und 51 überlagern. Zudem wird eine Grenze 71 der Abtastung durch den Lichtstrahl 125 eingeblendet. Im dargestellten Ausführungsbeispiel umfassen die Symbole 50A und 51A je ein rotes Dreieck und je eine Angabe in Bezug auf den Abstand zwischen dem Kraftfahrzeug 1 und dem jeweiligen Kind 50 und 51.

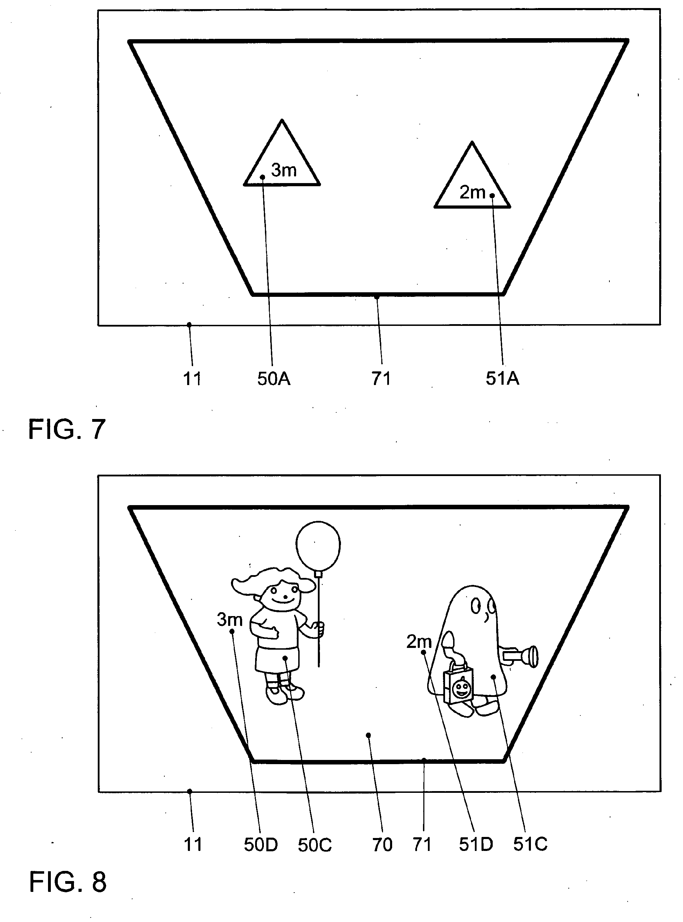

Fig. 7 zeigt ein Beispiel einer Darstellung mittels der Anzeigevorrichtung 11, wobei die Darstellung gemäß Fig. 7 der Darstellung gemäß Fig. 6 jedoch ohne das Bild 70 entspricht.

Fig. 8 zeigt ein weiteres alternatives Ausführungsbeispiel einer Darstellung mittels der Anzeigevorrichtung 11, wobei die Konturen 50C und 51C der Kinder 50 und 51 je zusammen mit einer Angabe 50D bzw. 51D in Bezug auf den Abstand zwischen dem Kraftfahrzeug 1 und dem jeweiligen Kind 50 und 51 dargestellt werden.

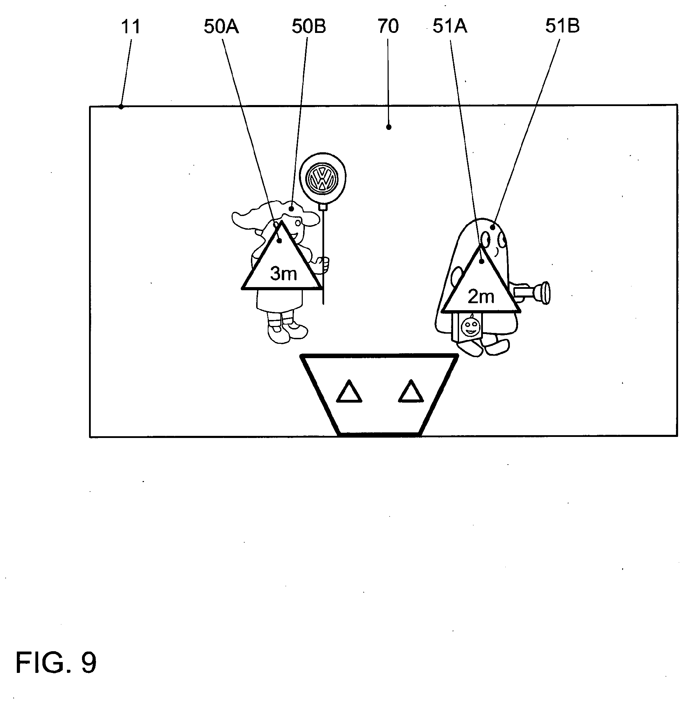

Fig. 9 zeigt ein weiteres alternatives Ausführungsbeispiel einer Darstellung mittels der Anzeigevorrichtung 11, wobei die Darstellung gemäß Fig. 9 der Darstellung gemäß Fig. 6 jedoch ohne die Einblendung der Grenze 71 der Abtastung durch den Lichtstrahl 125 entspricht. Statt der Grenze 71 ist eine zusätzliche Abbildung 80 eingeblendet, die die Grenze der Abtastung durch den Lichtstrahl 125 beschreibt.

### Bezugszeichenliste

- 1: Kraftfahrzeug
- 2: Heckleuchte
- 3: Seitenspiegel
- 4: Rückspiegel
- 10: Steuerung
- 11: Anzeigevorrichtung
- 12: Hindernissensor
- 20, 50, 51: Kind
- 30: Spiegel
- 31: Platte
- 32, 33: Torsionselement
- 32A, 33A: Torsionsachse
- 34, 39: Rahmen
- 35, 36, 37, 38: Permanentmagnet
- 50A, 51A: Symbol
- 50B, 51B: Abbild
- 50C, 51C: Kontur
- 50D, 51D: Angabe in Bezug auf einen Abstand
- 60, 61, 62: Schritt
- 70: Bild
- 71: Grenze
- 80: Abbildung
- 120: Laser
- 121: zweidimensionale Scannvorrichtung
- 122: Kamera
- 125: Lichtstrahl
- 126: Bereich
- 127: reflektierter Anteil eines Lichtstrahls

## Patentansprüche

1. Kraftfahrzeug (1) mit mindestens einem Sensor (12) zum Erkennen eines Hindernisses (20, 50, 51) in einer Umgebung des Kraftfahrzeuges (1), wobei der Sensor (12) einen Laser (120) zum Aussenden eines Lichtstrahls (125), eine zweidimensionale Scannvorrichtung (121) zum Lenken des Lichtstrahls (125) in eine Umgebung des Kraftfahrzeuges (1) durch Bewegen des Lichtstrahls (125) in einer ersten Ebene sowie in einer zur ersten Ebene orthogonalen zweiten Ebene und eine zur Erfassung eines von der Umgebung des Kraftfahrzeuges (1) reflektierten Anteils des Lichtstrahls (125) geeignete Kamera (122) umfasst, eine Steuerung (10) zur Integration eines Symbols (50A, 51A) zur Kennzeichnung des erkannten Hindernisses (20, 50, 51) zusammen mit einer Grenze (71) der Abtastung durch den Lichtstrahl (125) in ein Bild der Umgebung des Kraftfahrzeuges (1), wobei die Position des Symbols (50A, 51A) in Bezug auf das Bild im Wesentlichen der Position des Hindernisses (20, 50, 51) in dem Bild entspricht, und eine Anzeigevorrichtung (11) zur Darstellung des Bildes der Umgebung des Kraftfahrzeuges (1) zusammen mit dem Symbol (50A, 51A) und der Grenze (71) der Abtastung durch den Lichtstrahl (125) vorgesehen sind.

2. Kraftfahrzeug (1) nach Anspruch 1, **dadurch gekennzeichnet, dass** das Symbol (50A, 51A) eine Angabe in Bezug auf einen Abstand zwischen dem Kraftfahrzeug (1) und dem Hindernis (20, 50, 51) umfasst oder als eine Angabe in Bezug auf einen Abstand zwischen dem Kraftfahrzeug (1) und dem Hindernis (20, 50, 51) ausgestaltet ist.

3. Kraftfahrzeug (1) nach Anspruch 1 oder 2, **dadurch gekennzeichnet, dass** der Abstand zwischen dem Kraftfahrzeug (1) und dem Hindernis (20, 50, 51) mittels der Steuerung (10) mittels einer Laufzeitmessung oder mittels Interferometrie bestimmbar ist.

4. Kraftfahrzeug (1) nach einem der vorhergehenden Ansprüche, **dadurch gekennzeichnet, dass** das Symbol (50A, 51A) eine Warnung in Bezug auf das Hindernis (20, 50, 51) umfasst oder als eine Warnung in Bezug auf das Hindernis (20, 50, 51) ausgestaltet ist.

5. Kraftfahrzeug (1) nach einem der vorhergehenden Ansprüche, **dadurch gekennzeichnet, dass** das Symbol (50A, 51A) eine Angabe in Bezug auf einen Abstand zwischen dem Kraftfahrzeug (1) und dem Hindernis (20, 50, 51) sowie eine Warnung in Bezug auf das Hindernis (20, 50, 51) umfasst.

6. Kraftfahrzeug (1) nach einem der vorhergehenden Ansprüche, **dadurch gekennzeichnet, dass** die Kamera (122) eine auf eine Wellenlänge des Lichtstrahls (125) abgestimmte Kamera ist.

7. Kraftfahrzeug (1) nach einem der vorhergehenden Ansprüche, **dadurch gekennzeichnet, dass** der Abstand zwischen dem Kraftfahrzeug (1) und dem Hindernis (20, 50, 51) mittels der Steuerung (10) durch Messung der thermischen Intensität bei einer Wellenlänge des Lichtstrahls (125) bestimmbar ist.

8. Kraftfahrzeug (1) nach einem der vorhergehenden Ansprüche, **dadurch gekennzeichnet, dass** der Sensor (12) einen Spiegel (30) zur Reflexion des Lichtstrahls (125) in die Umgebung des Kraftfahrzeuges (1) umfasst, wobei der Spiegel (30) mit einem ersten Torsionselement (32) mit einer ersten Torsionsachse (32A) verbunden ist, wobei das erste Torsionselement (32) mit einem zweiten Torsionselement (33) mit einer zweiten Torsionsachse (33A) verbunden ist, und wobei die erste Torsionsachse (32A) im wesentlichen orthogonal zur zweiten Torsionsachse (33A) ausgerichtet ist oder die erste Torsionsachse (32A) zumindest eine zur zweiten Torsionsachse (33A) orthogonale Komponente besitzt.

9. Kraftfahrzeug (1) nach einem der vorhergehenden Ansprüche, **dadurch gekennzeichnet, dass** mit dem Sensor (12) die Kontur des Hindernisses (20, 50, 51) bestimmbar ist und/oder bestimmt wird.

10. Kraftfahrzeug (1) nach Anspruch 9, **dadurch gekennzeichnet, dass** die Steuerung (10) derart ausgestaltet ist, dass eine Angabe hinsichtlich des Abstands zwischen dem Kraftfahrzeug (1) und dem erkannten Hindernis (20, 50, 51) in die Kontur des erkannten Hindernisses (20, 50, 51) integrierbar ist und/oder integriert wird.

11. Verfahren zum Betrieb eines Kraftfahrzeuges (1), wobei mindestens ein Hindernis (20, 50, 51) in einer Umgebung des Kraftfahrzeuges (1) mittels eines Sensors (12) erkannt wird, wobei der Sensor (12) einen Laser (120) zum Aussenden eines Lichtstrahls (125), eine zweidimensionale Scannvorrichtung (121) zum Lenken des Lichtstrahls (125) in eine Umgebung des Kraftfahrzeuges (1) durch Bewegen des Lichtstrahls (125) in einer ersten Ebene sowie in einer zur ersten Ebene orthogonalen zweiten Ebene und eine zur Erfassung eines von der Umgebung des Kraftfahrzeuges (1) reflektierten Anteils des Lichtstrahls (125) geeignete Kamera (122) umfasst, und wobei ein mittels der Kamera (122) erfasstes Bild der Umgebung des Kraftfahrzeuges (1)) zusammen mit einem Symbol (50A, 51A) zur Kennzeichnung eines erkannten Hindernisses (20, 50, 51) dargestellt wird, wobei das Symbol (50A, 51A) das Bild an einer Position überlagert, die im wesentlichen der Position des Hindernisses (20, 50, 51) in dem Bild entspricht, und wobei eine Grenze (71) der Abtastung durch den Lichtstrahl (125) in das Bild eingeblendet wird.

## Claims

1. Motor vehicle (1) having at least one sensor (12) for identifying an obstacle (20, 50, 51) in the surroundings of the motor vehicle (1), wherein the sensor (12) comprises a laser (120) for emitting a light beam (125), a two-dimensional scanning apparatus (121) for directing the light beam (125) into the surroundings of the motor vehicle (1) by moving the light beam (125) in a first plane and in a second plane orthogonal to the first plane and a camera (122) suitable for detecting a portion of the light beam (125) reflected by the surroundings of the motor vehicle (1), a controller (10) for integration of a symbol (50A, 51A) for denoting the identified obstacle (20, 50, 51) together with a boundary (71) of the sampling by the light beam (125) into an image of the surroundings of the motor vehicle (1), wherein the position of the symbol (50A, 51A) in relation to the image corresponds substantially to the position of the obstacle (20, 50, 51) in the image, and a display apparatus (11) for presenting the image of the surroundings of the motor vehicle (1) together with the symbol (50A, 51A) and the boundary (71) of the sampling by the light beam (125) are provided.

2. Motor vehicle (1) according to Claim 1, **characterized in that** the symbol (50A, 51A) comprises an indication relating to a distance between the motor vehicle (1) and the obstacle (20, 50, 51) or is configured as an indication relating to a distance between the motor vehicle (1) and the obstacle (20, 50, 51) .

3. Motor vehicle (1) according to Claim 1 or 2, **characterized in that** the distance between the motor vehicle (1) and the obstacle (20, 50, 51) can be determined by means of the controller (10) by means of propagation time measurement or by means of interferometry.

4. Motor vehicle (1) according to one of the preceding claims, **characterized in that** the symbol (50A, 51A) comprises a warning relating to the obstacle (20, 50, 51) or is configured as a warning relating to the obstacle (20, 50, 51).

5. Motor vehicle (1) according to one of the preceding claims, **characterized in that** the symbol (50A, 51A) comprises an indication relating to a distance between the motor vehicle (1) and the obstacle (20, 50, 51) and a warning relating to the obstacle (20, 50, 51).

6. Motor vehicle (1) according to one of the preceding claims, **characterized in that** the camera (122) is a camera that is aligned with a wavelength of the light beam (125).

7. Motor vehicle (1) according to one of the preceding claims, **characterized in that** the distance between the motor vehicle (1) and the obstacle (20, 50, 51) can be determined by means of the controller (10) by measuring the thermal intensity at a wavelength of the light beam (125).

8. Motor vehicle (1) according to one of the preceding claims, **characterized in that** the sensor (12) comprises a mirror (30) for reflecting the light beam (125) into the surroundings of the motor vehicle (1), wherein the mirror (30) is connected to a first torsion element (32) having a first torsion axis (32A), wherein the first torsion element (32) is connected to a second torsion element (33) having a second torsion axis (33A), and wherein the first torsion axis (32A) is oriented substantially orthogonal to the second torsion axis (33A) or the first torsion axis (32A) has at least one component orthogonal to the second torsion axis (33A) .

9. Motor vehicle (1) according to one of the preceding claims, **characterized in that** the contour of the obstacle (20, 50, 51) can be determined and/or is determined using the sensor (12).

10. Motor vehicle (1) according to Claim 9, **characterized in that** the controller (10) is configured in such a way that an indication with respect to the distance between the motor vehicle (1) and the identified obstacle (20, 50, 51) can be integrated and/or is integrated into the contour of the identified obstacle (20, 50, 51).

11. Method for operating a motor vehicle (1), wherein at least one obstacle (20, 50, 51) in the surroundings of the motor vehicle (1) is identified by means of a sensor (12), wherein the sensor (12) comprises a laser (120) for emitting a light beam (125), a two-dimensional scanning apparatus (121) for directing the light beam (125) into the surroundings of the motor vehicle (1) by moving the light beam (125) in a first plane and in a second plane orthogonal to the first plane and a camera (122) suitable for detecting a portion of the light beam (125) reflected by the surroundings of the motor vehicle (1), and wherein an image of the surroundings of the motor vehicle (1), said image being detected by means of the camera (122), is presented together with a symbol (50A, 51A) for denoting an identified obstacle (20, 50, 51), wherein the symbol (50A, 51A) superimposes the image in a position that corresponds substantially to the position of the obstacle (20, 50, 51) in the image, and wherein a boundary (71) of the sampling by the light beam (125) is inserted into the image.

## Revendications

1. Véhicule automobile (1) doté d'au moins un capteur (12) pour la détection d'un obstacle (20, 50, 51) dans l'environnement du véhicule automobile (1), dans lequel le capteur (12) comporte un laser (120) émettant un faisceau lumineux (125), un dispositif de balayage bidimensionnel (121) dirigeant le faisceau lumineux (125) dans l'environnement du véhicule automobile (1) par déplacement du faisceau lumineux (125) dans un premier plan ainsi que dans un second plan orthogonal au premier plan et une caméra adaptée (122) pour enregistrer une fraction du faisceau lumineux (125) réfléchie dans l'environnement du véhicule automobile (1), et prévu avec une commande (10) pour intégrer un symbole (50A, 51A) pour la signalisation de l'obstacle détecté (20, 50, 51) avec une limite (71) de balayage par le faisceau lumineux (125) en une image de l'environnement du véhicule automobile (1), dans lequel la position du symbole (50A, 51A) sur l'image correspond essentiellement à la position de l'obstacle (20, 50, 51) dans l'image, et avec un dispositif d'affichage (11) générant l'image de l'environnement du véhicule automobile (1) ainsi que le symbole (50A, 51A) et la limite (71) de balayage par le faisceau lumineux (125).

2. Véhicule automobile (1) selon la revendication 1, **caractérisé en ce que** le symbole (50A, 51A) comporte une indication concernant la distance entre le véhicule automobile (1) et l'obstacle (20, 50, 51) ou est conçu comme indication concernant la distance entre le véhicule automobile (1) et l'obstacle (20, 50, 51).

3. Véhicule automobile (1) selon la revendication 1 ou 2, **caractérisé en ce que** la distance entre le véhicule automobile (1) et l'obstacle (20, 50, 51) peut être déterminée par la commande (10) par mesure du temps de parcours ou par interférométrie.

4. Véhicule automobile (1) selon l'une des revendications précédentes, **caractérisé en ce que** le symbole (50A, 51A) comporte un avertissement concernant l'obstacle (20, 50, 51) ou est conçu comme avertissement concernant l'obstacle (20, 50, 51).

5. Véhicule automobile (1) selon l'une des revendications précédentes, **caractérisé en ce que** le symbole (50A, 51A) comporte une indication concernant la distance entre le véhicule automobile (1) et l'obstacle (20, 50, 51) ainsi qu'un avertissement concernant l'obstacle (20, 50, 51).

6. Véhicule automobile (1) selon l'une des revendications précédentes, **caractérisé en ce que** la caméra (122) est une caméra adaptée à une longueur d'onde du faisceau lumineux (125).

7. Véhicule automobile (1) selon l'une des revendications précédentes, **caractérisé en ce que** la distance entre le véhicule automobile (1) et l'obstacle (20, 50, 51) peut être déterminée par la commande (10) par mesure de l'intensité thermique sur une longueur d'onde du faisceau lumineux (125).

8. Véhicule automobile (1) selon l'une des revendications précédentes, **caractérisé en ce que** le capteur (12) comporte un miroir (30) réfléchissant le faisceau lumineux (125) dans l'environnement du véhicule automobile (1), dans lequel le miroir (30) est connecté à un premier élément de torsion (32) doté d'un premier axe de torsion (32A), dans lequel le premier élément de torsion (32) est connecté à un second élément de torsion (33) doté d'un second axe de torsion (33A), et dans lequel le premier axe de torsion (32A) est disposé de façon essentiellement orthogonale au second axe de torsion (33A) ou le premier axe de torsion (32A) occupe au moins une composante orthogonale au second axe de torsion (33A).

9. Véhicule automobile (1) selon l'une des revendications précédentes, **caractérisé en ce que** le contour de l'obstacle (20, 50, 51) est déterminable et/ou déterminé par le capteur (12).

10. Véhicule automobile (1) selon la revendication 9, **caractérisé en ce que** la commande (10) est conçue de telle sorte qu'une indication concernant la distance entre le véhicule automobile (1) et l'obstacle détecté (20, 50, 51) est intégrable et/ou intégrée au contour de l'obstacle détecté (20, 50, 51).

11. Procédé pour l'opération d'un véhicule automobile (1), dans lequel au moins un obstacle (20, 50, 51) dans l'environnement du véhicule automobile (1) est détecté au moyen d'un capteur (12), dans lequel le capteur (12) comporte un laser (120) émettant un faisceau lumineux (125), un dispositif de balayage bidimensionnel (121) dirigeant le faisceau lumineux (125) dans l'environnement du véhicule automobile (1) par déplacement du faisceau lumineux (125) dans un premier plan ainsi que dans un second plan orthogonal au premier plan et une caméra adaptée (122) pour enregistrer une fraction du faisceau lumineux (125) réfléchie dans l'environnement du véhicule automobile (1), et dans lequel une image de l'environnement du véhicule automobile (1) enregistrée au moyen de la caméra (122) est réalisée en même temps d'un symbole (50A, 51A) pour la signalisation d'un obstacle détecté (20, 50, 51), dans lequel le symbole (50A, 51A) recouvre l'image à une position qui correspond essentiellement à la position de l'obstacle (20, 50, 51) dans l'image, et dans lequel la limite (71) de balayage par le faisceau lumineux (125) est insérée dans l'image.
